# EUROPEAN PATENT APPLICATION

(11) **EP 4 763 808 A1**
(43) Date of publication of application: **24.06.2026**
(21) Application number: 24221307.2
(22) Date of filing: 18.12.2024
(51) Int. Cl.: C02F 1/04, C02F 1/06, C02F 1/14, B01D 3/10, B01D 5/00, C02F 103/08

(54) **AUTONOMOUS DESALINATION PLANT WITH VACUUM EVAPORATION AND CONDENSATION COLUMN**

(71) Applicant: H2ON Limited, 3090 Limassol (PT)
(72) Inventor: SPODARETS, Dmytro, 33012 Oviedo (ES)
(74) Representative: RVDB

(57) **Abstract**

The invention relates to an autonomous desalination plant consists of at least one vacuum evaporation-condensation column of cylindrical shape, at least one storage tank for fresh water, a power source, a control unit, the lower part of the evaporation-condensation column consists of freely open, coaxially located outer and inner pipes, wherein the upper part of the inner pipe is made expanding towards the top, the outer and inner pipes are hydraulically connected to an evaporation chamber smoothly connected to the outer pipe of the column and freely open at the top, wherein the upper part of the evaporation chamber is made of a conical shape, tapering towards the top, inside the evaporation chamber there is an expanding part of the inner pipe, a heating radiator, the inlet of which is connected to the coolant supply line, and the outlet is connected to the coolant discharge line, made in the form of pipelines.

## Description

### Technical field

The invention relates to the field of desalination of seawater, in particular to autonomous desalination plants, and can be used to obtain drinking water, especially in regions devoid of clean freshwater reservoirs and centralized sources of electric and thermal energy, mainly in countries with hot, dry climates using solar energy.

### Prior art

Patent EP0632737 A1 discloses the design of a desalination system consisting of a vacuum evaporation and condensation device, a storage tank for fresh water and a control personal computer (PC), while the evaporation and condensation device is connected to an external line forming a channel of desalinated seawater coming from a water source, as well as to an external line forming a channel for removal of brine from the evaporation chamber into the reservoir, while the evaporation and condensation device includes an evaporation chamber with a radiator for heating the desalinated water coming from the external pipe to a temperature of 50-70 °C and a condensation chamber with a radiator for cooling the water evaporated from the evaporation chamber, and the heating circuit of the radiator for heating the desalinated water coming from the external pipe is hydraulically connected to an external coolant supply line equipped with at least one circulation pump - seawater from the reservoir, as well as to the coolant discharge line into the reservoir, and the condensation chamber is hydraulically connected with a fresh water discharge line to a storage tank for fresh water.

From the source WO 8102154 A1, a desalination plant is known in which the cooling circuit of the cooling radiator of the water evaporated from the evaporation chamber is hydraulically connected to an external, equipped with a circulation pump, supply line of the cooler - seawater from the reservoir, as well as with an external line of discharge of the cooler into the reservoir.

From patent RU 2613920 C1, an autonomous desalination plant is known, including a desalinated water tank, an evaporation chamber, a heating element, a bubbling device, a condenser separator, a fresh water collection tank, while a heating element connected to a cylindrical evaporation chamber with a removable bottom and a removable lid in the form of a truncated cone is installed below the level of desalinated water a solar collector, under which a bubbling device is placed, under which a condenser separator is installed, connected by a coil to a fresh water collection tank, while the condenser separator is connected by a pipe through an air blower connected to a solar battery to a bubbling device and connected by a pipe to the vapor-air mixture zone under the lid of the evaporation chamber.

US patent 2016251236 A1 discloses the design of a desalination system, including a vertical column, the lower end of which is immersed in the volume of the treated liquid. The column has a dark outer surface capable of absorbing electromagnetic energy, and at least one vacuum compressor is connected to it to create vacuum pressure in the vertical column so that the liquid is drawn into the vertical column through holes in the vertical column. The condensation dome has a main shell, which receives liquid steam from a vertical column through a steam port connecting the vertical column and the condensation dome. An external turbine powered by wind surrounds the main shell of the condensation dome and draws outside air into the space around the main shell of the condensation dome. The tank is connected to the condensation dome by means of a pipe and receives desalinated liquid from the condensation dome.

In these analogues, desalination plants have a complex design, relatively low energy efficiency, the need to ensure control of the level of desalinated water, the temperature of the supplied coolant, and pumping fresh water from the plant.

The technical problem, which the claimed invention is aimed at solving, is to create a design of an autonomous desalination plant with increased energy efficiency during its operation and high productivity.

The technical result is an increase in energy efficiency and autonomous operation of the desalination plant, while simplifying its design and maintenance during operation.

### Summary of the invention

The technical task is solved due to the claimed design of an autonomous desalination plant consisting of
at least one vacuum evaporation and condensation column of cylindrical shape,
at least one storage tank for fresh water,

Power supply,
the control unit,
the lower part of the evaporation and condensation column consists of freely open, coaxially arranged outer and inner pipes,
in this case, the upper part of the inner tube is made expanding to the top,
the outer and inner pipes are hydraulically connected to the evaporation chamber, smoothly coupled to the outer pipe of the column and freely open from above,
moreover, the upper part of the evaporation chamber is made of a conical shape, tapering to the top,
inside the evaporation chamber there is an expanding part of the inner pipe, a heating radiator, the inlet of which is connected to the coolant supply line, and the outlet is connected to the coolant discharge line, made in the form of pipelines,
in this case, the coolant moves along a closed circuit consisting of at least one first circulation pump, a solar collector, a coolant supply line, a heating radiator, and a coolant outlet line,
made in turn in the form of two adjacent lines, one of which partially passes through at least one first heat exchanger, and the second line partially passes through at least one second heat exchanger,

A condensation chamber is located above the evaporation chamber,
inside which a cooling radiator is installed, the inlet of which is connected to the cooler supply line, connected in turn to at least one second circulation pump, and the outlet is connected to the cooler outlet line, the lower end of which is located in the reservoir,
in this case, the condensation chamber is connected to at least one storage tank for fresh water by means of a fresh water outlet line
made with a conical outlet pipe connected to a condensation chamber, below which at least one divider is installed in the pipeline of the fresh water outlet line, in which at least one through hole is made for the passage of fresh water,
in this case, the divider is installed in the pipeline of the freshwater drainage line so that its surface at least partially overlaps the pipeline of the freshwater drainage line,
a set of capillary tubes is vertically installed below the divider in the pipeline of the freshwater drainage line, at least partially covering the cross-sectional area of the pipeline of the freshwater drainage line,
in this case, the fresh water discharge line partially passes through the first heat exchanger,
the storage tank with fresh water is hydraulically connected to at least one ejector pump, which in turn is connected to the condensation chamber by means of an air pumping line made in the form of a pipeline,
in this case, the first, second, third circulation pumps and the ejector pump are connected to the power source by means of a control unit.

Preferably, the ratio of the diameters of the outer and inner pipes should be in the range from 2:5 to 3:5.

In particular embodiments, the upper expanding portion of the inner tube may be made conical, either rounded or rectangular.

In particular embodiments, the upper conical portion of the evaporation chamber may be smoothly mating with the shell.

The coolant discharge line may pass outside the column, or at least partially pass through at least one of the sections of the channel formed by the outer pipe of the evaporation and condensation column.

The fresh water drainage line can pass outside the column, or at least partially pass through at least one of the sections of the channel formed by the outer pipe of the evaporation and condensation column.

A set of solar photovoltaic panels equipped with at least one inverter can be used as a power source.

It is preferable to supply the inverter with at least one battery.

In private versions, the power grid can be used as the main or additional power source.

In private versions, the heating circuit of the solar collector can be made in the form of a plastic pipe spread out on the ground in a zigzag, or specially made plastic panels, or a pipe rolled into asphalt.

Water or solutions of ethylene or propylene glycol can be used as a coolant.

Preferably, water, ethylene or propylene glycol solutions used as a coolant should contain anticorrosive additives.

Preferably, at least one temperature sensor and at least one flow meter electrically connected to the control unit should be installed at the outlet of the first circulation pump, the coolant supply and outlet lines, the cooler supply and outlet lines, and the fresh water outlet lines.

Preferably, at least one water level sensor electrically connected to the control unit should be installed in the evaporation chamber and in the storage tank for fresh water.

Preferably, at least one temperature sensor and at least one salinity sensor electrically connected to the control unit are installed in the upper part of the outer and inner pipes.

Preferably, at least one pressure sensor electrically connected to the control unit should be installed in the condensation chamber.

The autonomous desalination plant contains an ejector pump, for which, in particular versions, the resulting fresh water can be used as a working fluid, while the inlet and outlet of the working fluid circulation line of the ejector pump, partially passing through at least one third heat exchanger, are hydraulically connected to a storage tank for fresh water, and the inlet and outlet of the cooling line the working fluid of the ejector pump, partially passing through the third heat exchanger, is located in a reservoir, while at least one third circulation pump is installed at the inlet of the cooling line of the working fluid.

In particular versions, a demister or at least one demister gasket can be installed in an autonomous cooling system between the evaporation chamber and the condensation chamber.

In particular versions, a self-cleaning device can be mounted in an autonomous humidification unit in the evaporation chamber, which is a sprayer located above the heating radiator and electrically connected to the control unit.

Preferably, the first and second coarse filters, respectively, are installed at the inlet to the second and third circulation pumps, after which the first and second fine filters, respectively, can be installed.

Preferably, the fresh water storage tank is equipped with at least one centrifugal pump electrically connected to the control unit.

Plate type heat exchangers can be used as the first, second and third heat exchangers.

In particular embodiments, the outlet of the inner tube may be connected to a settling tank for accumulating brine and subsequently producing crystallised salt.

The claimed design of an autonomous desalination plant has the following advantages compared to the known ones:
- It is non-volatile due to the possibility of using solar energy, which is an inexhaustible source of energy, environmentally friendly and safe,
- there is no need to ensure pumping of fresh water (water drains under the influence of gravity) due to the conical shape of the outlet pipe of the fresh water outlet line;
- there is no risk of mixing desalinated water with fresh water in case of malfunction of the plant, which makes it possible not to use a salinity control system for the obtained fresh water compared to known desalination plants;
- a high degree of automation of the processes of controlling the operation of the plant as a whole and its individual nodes through the use of a control unit,
- ensuring the circulation of seawater for desalination inside the plant without the use of additional pumps and the need to control its level,
- the boiling of desalinated seawater occurs at temperatures below 100 °C due to the creation of a vacuum in the evaporation chamber, which significantly reduces the energy consumption of the plant (there is no need to heat the heating radiator for boiling desalinated seawater),
- there is no need to equip the fresh water outlet line with a non-return valve to prevent the possible flow of fresh water back into the condensation chamber along the fresh water outlet line due to the location of the water jet ejector pump significantly below the location of the outlet pipe of the fresh water outlet line;
- the presence of a self-cleaning device for the heating radiator ensures ease of maintenance of the plant and an increase in its service life;
- ensuring passive discharge of gases released during evaporation of seawater by dividing the flow of received fresh water coming out of the outlet pipe into droplets when passing through at least one divider and their further movement through capillary tubes along the fresh water discharge line.

### Brief description of the drawing

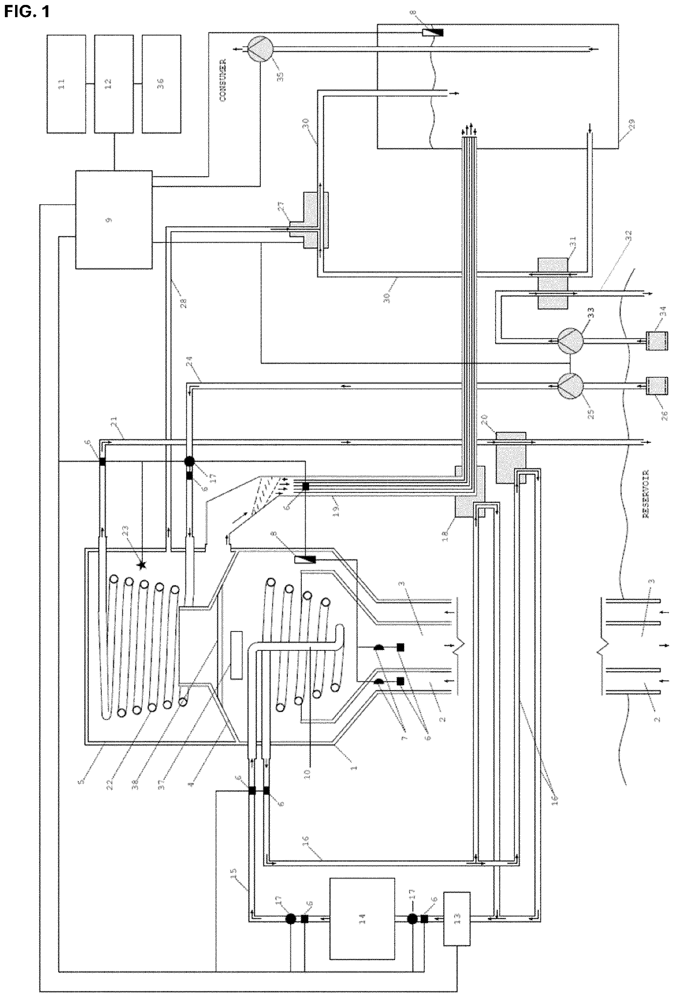

The invention is explained by a drawing (Fig. 1), which schematically shows a desalination plant (arrows show the movement of water in the plant), where 1 is a vacuum evaporation and condensation column, 2 is an external pipe, 3 is an internal pipe, 4 is an evaporation chamber, 5 is a condensation chamber, 6 is a temperature sensor, 7 is salinity sensor, 8 - water level sensor, 9 - control unit, 10 - heating radiator, 11 - solar panels, 12 - inverter, 13 - first circulation pump, 14 - solar collector, 15 - coolant supply line, 16 - coolant outlet line, 17 - flow meter, 18 - first heat exchanger, 19 - fresh water outlet line, 20 - second heat exchanger, 21 - cooler outlet line, 22 - cooling radiator, 23 - pressure sensor, 24 - cooler supply line, 25 - second circulation pump, 26 - first coarse filter, 27 - ejector pump, 28 - air pumping line, 29 - storage tank for fresh water, 30 - circulation line of the working fluid of the ejector pump 27, 31 - third heat exchanger, 32 - cooling line of the working fluid, 33 - third circulation pump, 34 - second coarse filter, 35 - centrifugal pump, 36 - accumulator, 37 - self-cleaning device, 38 - demister.

### Embodiment of the invention

An autonomous desalination plant consists of a vacuum evaporation and condensation column, supply and discharge lines for a cooler (seawater from a reservoir) and a coolant, a fresh water discharge line, a power source, and a control unit.

Vacuum evaporation and condensation column 1 of cylindrical shape consists of upper and lower parts smoothly interconnected.

The lower part of the column with a height of ~ 10 meters above the level of an open reservoir is made in the form of freely open coaxially arranged outer 2 and inner 3 pipes. The outer 2 and inner 3 pipes form a channel for the intake of desalinated seawater from the reservoir. At the same time, the boiling water with increased salinity (brine) is discharged from the column through the inner pipe 3 into the reservoir. The desalinated seawater coming through the channel of the outer pipe 2, when it reaches the edge of the bowl-shaped part of the inner pipe 3, flows into it (into the inner pipe).

The lower part of column 1 can be located directly in the reservoir or hydraulically connected to the reservoir by means of a horizontal pipeline in the case of a desalination plant located on the shore near the reservoir.

Preferably, the ratio of the diameters of the inner 3 and outer 2 pipes should be in the range from 2:5 to 3:5. The ratio of the diameters of the inner 3 and outer 2 pipes was selected experimentally.

If the ratio of the diameters of the inner pipe to the outer pipe is less than 2:5, the formation of a turbulent flow of the resulting brine in the inner pipe is possible, which will lead to a violation of the natural circulation of water inside the column.

If the ratio of the diameters of the inner pipe to the outer pipe is greater than 3:5, the formation of a turbulent flow of incoming desalinated seawater is possible, which will lead to a slowdown and difficulty in its entry into the evaporation chamber and subsequent disruption of the natural circulation of water inside the column.

The upper part of the column 1 consists of an evaporation chamber 4 and a condensation chamber 5. Preferably, the values of the outer diameters of the lower and upper parts of the column should be in the range from 60 to 200 cm. The specified range of values was chosen experimentally in order to achieve maximum plant performance with a laminar flow of water inside the column, as well as an optimal location of the common center of mass. The preferred height of the upper part of the column is ~ 4-6 meters.

The overall preferred height of the vacuum evaporation and condensation column is about 15 meters.

The outer 2 and inner 3 pipes are hydraulically connected to a cylindrical evaporation chamber 4, while the upper part of the inner pipe 3 is conical, expanding to the top (cup-shaped), and located inside the evaporation chamber 4. The expanding upper part of the inner tube can be of any shape (the interface sections can be rounded or at right angles). Making the upper part of the inner tube bowl-shaped is preferable in order to increase the contact area of the desalinated seawater with the heating radiator.

The bowl-shaped shape of the upper part of the inner tube is also preferable to ensure uniform load on the plant structure and stability of the plant structure as a whole.

It is preferable to monitor the amount of salinity and the temperature of the seawater entering the desalination plant and the resulting brine. For this purpose, at least one temperature sensor 6 and a water salinity sensor 7 can be installed on the inner walls of the inner and outer pipes.

It is preferable to install at least one water level sensor 8 between the outer wall of the bowl-shaped part of the inner pipe 3 and the inner wall of the outer pipe 2 (near the place of the hydraulic connection of the pipes where incoming seawater flows from the outer pipe into the inner pipe) to monitor the volume and level of incoming seawater for desalination.

All used temperature, salinity, water level sensors, flow meters are designed with the ability to transmit a signal over long distances and can be equipped with an autonomous power source or powered from an external power source (the main one for all energy-consuming components of the plant) using the control unit 9. The operation of the sensors and flowmeters is also adjusted using the control unit 9.

The level of seawater entering desalination is unstable and depends on the atmospheric pressure. The water level sensor in the external pipe is necessary to determine the degree of seawater filling of the evaporation chamber and, accordingly, the degree of immersion of the heating radiator in water, i.e. the contact area of the heating radiator with desalinated water. According to the received readings of the water level sensor, the speed of the coolant and cooler flows is adjusted using the control unit 9 to ensure a greater degree of immersion of the heating radiator in water, which in turn will lead to boiling of a larger volume of water and obtaining a larger volume of fresh water vapor entering the condensation chamber, which will generally increase the productivity of the desalination process.

An immersion temperature sensor or other types of sensors suitable for measuring temperature in liquids can be used as a temperature sensor, for example, an immersion temperature sensor (resistance thermometer, Pt100, Pt1000); a digital temperature sensor (for example, DS18B20); a type J or T thermocouple.

Any waterproof digital salinity sensors manufactured by industry can be used as salinity sensors. For example, electrode conductivity sensors (Apure EC-2000) or inductive sensors (Thermo Fisher Scientific AquaSensors).

Hydrostatic sensors (e.g. VEGA VEGABAR 86) and capacitive sensors (e.g. Endress+Hauser Liquicap M FTI51) resistant to vacuum and aggressive media can be used as water level sensors.

In particular embodiments, it is possible to execute the plant with at least two evaporation columns, which will increase the capacity of the plant as a whole, i.e. the volume of fresh water produced.

Due to the claimed design of the plant, unlike desalination plants using osmosis, the brine formed as a result of boiling seawater can be highly concentrated. To increase the environmental friendliness of the desalination process in particular variants, the outlet of the inner pipe 3 for the discharge of the forming brine can be connected to an open evaporator sump (not shown in the drawing) located near the plant. In regions with dry and hot climates, brine will accumulate in the sump and evaporate naturally under the influence of sunlight until a crystalline salt is formed. Thus, due to the claimed design of the seawater desalination plant, the process of obtaining fresh water becomes practically waste-free and safe for the environment.

The evaporation chamber 4 is connected to the outer pipe 2 of column 1 and is freely open from above. The upper part of the evaporation chamber 4 is made of a conical shape, tapering to the top. In particular embodiments, the upper conical portion of the evaporation chamber may be smoothly mating with the shell. The execution of the upper part of the conical evaporation chamber will ensure the creation of a directed flow of the resulting water vapor entering the condensation chamber 5.

In the evaporation chamber 4 there is a heating circuit - a radiator for heating seawater 10. The seawater heating radiator 10 can be made, for example, in the form of a copper pipe coil. A coolant circulates from bottom to top inside the heating radiator 10. Water or solutions of ethylene or propylene glycol with anticorrosive additives can be used as a coolant. The circulation of the coolant is provided by at least one first circulation pump 13, the operation of which is regulated by the control unit 9.

The control unit 9 is equipped with a wireless communication unit (GSM, bluetooth, wi-fi, etc.) for connecting to an external server (not shown in the drawing). A modem with a SIM card with mobile Internet (GPRS, GSM, 2G, 4G) can be used as a wireless communication unit. When the time for data transfer to the server arrives, a communication session of the remote communication unit (GSM module) of the control unit with an external server is initiated and data is transferred to an external server. In the event of an emergency, a communication session with the server is established at the time of detection of malfunctions of the plant, and all necessary information is transmitted to the server to identify the nature of the malfunction. In addition, the server further forwards this information to the personnel servicing the desalination plant.

Using the control unit, the components of the desalination plant (pumps, sensors, heating radiator, self-cleaning device) are put into operation by supplying power from a power source, their operation is monitored and regulated, readings received from sensors are processed and data on the operation of the plant is transmitted to an external server.

A set of solar photovoltaic panels 11 equipped with at least one inverter 12 can be used as a power source. The inverter is necessary to convert the direct current generated by solar panel photocells into alternating current, and also use the inverter to control the operation of solar panels, ensuring their efficiency.

It is preferable to supply the inverter with at least one battery 36 to save excess electricity generated during periods when energy consumption is reduced. In addition, the accumulated electricity in the battery can be used at night or in bad weather with a lack of sunlight.

If power lines run nearby the plant or the desalination plant is located near populated areas, the power grid can be used as a power source (not shown in the drawing).

The heating of the coolant occurs during its passage through the heating circuit of the solar collector 14.

The coolant circulates in a closed circuit: the first circulation pump 13 -> solar collector 14 -> coolant supply line 15 -> heating radiator 10 -> coolant outlet line 16 -> the first circulation pump 13.

The coolant supply line 15 is a hollow pipe located outside the evaporation column 1.

The heating circuit of the solar collector 14 can be made in the form of a zigzag plastic pipe located on the ground surface near the plant, or specially made plastic panels, or a pipe rolled into asphalt, or another structure that absorbs solar radiation and provides heating of the coolant. The coolant passing through the heating circuit of the solar collector 14 will be heated during daylight hours due to solar energy.

To control the volume of incoming seawater as a coolant and its heating temperature, at least one flow meter 17 and a temperature sensor 6 can be installed at the inlet and outlet of the solar collector 14, which are also controlled using the control unit 9.

Any waterproof flow meters manufactured by industry can be used as flow meters, for example, electromagnetic (for example, Endress+Hauser Proline Promag W), coriolis (for example, Siemens SITRANS FC), and vortex (for example, Yokogawa AXF), suitable for operation in the range of 5-90 °C and various environments, including seawater.

The coolant discharge line 16 is made with branching into two main lines: the first main partially passes through at least one first heat exchanger 18, through which in turn the fresh water discharge line 19 partially passes; the second main partially passes through at least one second heat exchanger 20, through which in turn the cooler discharge line partially passes 21.

After passing the coolant through the coil of the heating radiator 10 along the coolant outlet line 16, the coolant passes through the first heat exchanger 18. The coolant discharge line is equipped with at least one temperature sensor 6 at the outlet of the heating radiator 10.

Plate type heat exchangers, which are commercially available and inexpensive, can be used as heat exchangers used in the plant. In addition, plate heat exchangers are compact, have a long service life, have high efficiency, reliability, convenient and easy to install.

The coolant circulates in a closed circuit: solar collector 14 -> heating radiator 10 -> the first heat exchanger 18 with a partially passing fresh water outlet line 19 inside it and the second heat exchanger 20 with a partially passing cooler outlet line 21 -> the first circulation pump 13 -> solar collector 14 → heating radiator 10. As a result of the passage of the cooled coolant through the first 18 and second 20 heat exchangers, heat exchange occurs between the coolant and the heated fresh water and the cooler passed through the cooling radiator 22. Seawater from the reservoir is used as a cooler.

Passing through the solar collector 14, the coolant is heated ~ to a temperature of 60 ° C, then enters the supply line 15 into the coil of the heating radiator 10, where it gives off part of the thermal energy during boiling to desalinated seawater entering the evaporation chamber at a temperature of ~ 20 ° C. At the outlet of the coil of the heating radiator 10, the temperature of the coolant reaches ~ 25 ° C, since part of the thermal energy of the coolant is consumed when the desalinated water boils. The outlet of the radiator coil 10 is connected to the coolant outlet line 16, partially passing through the first heat exchanger 18, through which, in turn, the fresh water outlet line 19 partially passes. The temperature of the received fresh water and moving along the discharge line is 19 - 55 ° C, in connection with which, in the first heat exchanger 18, heat exchange occurs between the cooled coolant and condensed fresh water, as a result of which the coolant is heated to a temperature of ~ 35 ° C, and again enters the solar collector 14 using the first circulation pump 13. Passing through the solar collector 14, it heats up again - to a temperature of 60 ° C and enters the heating radiator 10.

At the same time, through the adjacent second line of the discharge line 16, the coolant enters the second heat exchanger 20, through which the discharge line of the cooler 21 partially passes. Cooler (sea water coming from a reservoir) with a temperature of ~ 20°C enters the cooling radiator coil 22, located in the condensation chamber 5. When moving along the coil of the cooling radiator 22, the cooler takes part of the thermal energy from the hot water vapors settling on the coil and condensing on it, as a result of which the cooler heats up - to a temperature of 50 ° C, flows out of the condensation chamber 5 along the discharge line 21, the end of which is located in a reservoir (open circuit). Before draining into an open reservoir, the outlet line of the cooler 21 partially passes through the second heat exchanger 20. In the second heat exchanger 20, the heated cooler (~ to a temperature of 50 ° C) partially exchanges thermal energy with the cooled coolant passing through the second heat exchanger 20 along the second line of the discharge line 16. As a result, the partially cooled coolant (~ to a temperature of 25 ° C) is partially heated again (~ to a temperature of 30 ° C) and enters the solar collector 14 by means of the first circulation pump 13 for additional heating to the required temperature, after which it enters the heating radiator 10.

When desalinated seawater boils in the bowl-shaped part of the inner pipe 3, part of the thermal energy is transferred to the resulting brine, and part to the resulting water vapor. Water vapor rises up into the condensation chamber 5, in which it condenses on the cooling radiator 22 and on the inner walls of the condensation chamber 5, while giving part of the thermal energy to the cooler through the walls of the cooling radiator coil 22, while part of the thermal energy remains in condensed fresh water, so the resulting fresh water will be warm ~ 35-40 ° C, due to this, partial heating of the cooled coolant occurs in the second heat exchanger 20.

Thus, the energy efficiency of the plant as a whole increases due to its design, which provides for the possibility of reuse of the generated thermal energy, since partial heating of the coolant is additionally carried out due to its circulation through heat exchangers, in which thermal energy is exchanged between the coolant and the resulting fresh water, coolant and cooler.

It is also possible to circulate the coolant without using a circulation pump due to convection (by analogy with the circulation of hot water in heating systems in residential buildings), which will also increase the energy efficiency of the plant as a whole. Providing the possibility of coolant circulation without using a circulation pump due to convection is a new design solution and unique for this type of desalination systems. But in order to increase the productivity of the plant and increase the speed of desalination of water, forced circulation of the coolant is carried out using pumps.

The condensation chamber 5 is located above the evaporation chamber 4. Inside the condensation chamber 5 there is a cooling radiator 22, which can be made, for example, in the form of a copper pipe coil. To control the vacuum created and maintained, the condensation chamber may be equipped with at least one pressure sensor 23.

Any pressure sensors manufactured by the industry can be used as pressure sensors, for example, piezoresistive sensors (for example, WIKA A-10) and capacitive sensors (for example, Endress+Hauser Cerabar PMP71). The creation of a vacuum in the condensation chamber 5 is carried out using at least one water jet ejector pump 27 connected to the condensation chamber 5 by means of an air pumping line 28.

The cooler enters the cooling radiator 22 through the supply line of the cooler 24 from the reservoir and circulates inside the cooling radiator 22 from bottom to top. The supply of seawater as a cooler to the cooling radiator 22 is provided by at least one second circulation pump 25 connected to the control unit 9. The first coarse filter 26 is installed at the inlet of the second circulation pump 25. Any filter manufactured by the industry with a stainless steel mesh filter can be used as a coarse filter. The coarse filter is designed for pre-purification of water from mechanical impurities such as sand, rust, algae, small marine fish and various small household waste that may be in the reservoir.

It is also advisable to use a fine filter (not shown in the drawing) to remove undissolved heavy metal compounds, various organic compounds and chemical elements, and relatively large microorganisms. The supply of circulation pumps providing seawater supply to the desalination plant with coarse and fine filters will increase the service life of the pumps, as well as reduce the energy consumption of the plant as a whole.

After passing the cooler through the cooling radiator 22, seawater flows through the outlet line of the cooler 21 back into the reservoir, partially passing through the second heat exchanger 20. The heated flow of the cooler, passing through the second heat exchanger 20, partially transfers its thermal energy to the coolant.

The cooler is withdrawn from the cooling radiator 22 due to the amount of pressure under which the cooler enters the cooling radiator 22 using a second circulation pump 25.

To control the volume of incoming seawater as a cooler and the temperature of the cooler, at least one flow meter 17 and a temperature sensor 6 can be installed on the supply lines 24 and outlet 21 of the cooler, which are also controlled using the control unit 9.

The fresh water discharge line 19 is made with an outlet pipe connected to a condensation chamber. The outlet pipe of the fresh water outlet line is made conical to ensure the collection of small condensate droplets into larger ones and their faster rolling, and entering the storage tank 29. Condensed drops of the resulting fresh water flow down the inclined surface (conical shape) of the upper part of the evaporation chamber into the outlet pipe of the fresh water outlet line 19, and then into the storage tank for fresh water 29. Below the outlet pipe in the fresh water outlet line 19, at least one fresh water flow divider is installed (not shown in the drawing), in which at least one through hole is made for the passage of water. The divider is installed in the pipeline of the freshwater drainage line 19 so that its surface at least partially overlaps the pipeline of the freshwater drainage line to ensure effective droplet formation. If two or more dividers are installed in the pipeline of the fresh water outlet line 19, they are positioned one above the other in such a way that the holes in the dividers are staggered relative to each other. The divider can be made in the form of a mesh structure, a perforated plate or a system of radial blades.

A set of capillary tubes is vertically installed below the divider in the pipeline of the freshwater drainage line, at least partially overlapping the cross-sectional area of the pipeline of the freshwater drainage line.

When seawater boils, gaseous products will be released (1 m3 can emit about 200 liters of dissolved gases under low pressure conditions), which in turn can lead to an increase in pressure inside the evaporation chamber and a decrease in the degree of vacuum.

The molecules of gases released during boiling are heavier than gaseous water molecules, therefore they will rise up more slowly and partially enter the outlet pipe of the fresh water outlet line 19 together with the flow of the received fresh water. The flow of fresh water will flow down the inclined conical surface of the outlet pipe into the vertical pipeline of the discharge line 19 and enter the divider. When a stream of fresh water passes through the openings of the divider, water droplets will form. The resulting water droplets will "break up", "divide" the gaseous stream into smaller streams. The "separated" gaseous products will partially dissolve in fresh water droplets and fall with them into capillary tubes, and then into a storage tank for fresh water. Thus, molecules of gases released during boiling by drops of fresh water will be "pushed" down the discharge line, i.e. molecules of gaseous products will be naturally partially removed from the desalination plant, naturally maintaining a vacuum. The ejector pump 27 can only be used when starting the plant to create a vacuum. But to increase the productivity of the desalination plant, the ejector pump can work constantly.

Passive discharge of gases released during evaporation of seawater by installing at least one divider and a set of vertically mounted capillary tubes into the pipeline of the fresh water outlet line is a new design solution in the claimed design of a desalination plant, unknown to the authors from the state of the art.

Providing passive gas discharge significantly reduces the load (energy consumption) on the ejector pump 27, and there is also no need to install a non-return valve on the air pumping line from the condensation chamber due to the location of the ejector pump at a level equal to ~ the height of the storage tank for fresh water. In the event of an emergency shutdown of the ejector pump or its failure, fresh water from the freshwater storage tank will be able to rise along the air pumping line 28 to a level of ~ 10 meters before reaching the level of the condensation chamber (at a height of ~ 12-13 meters from the ground), due to which the autonomy of the desalination plant is also achieved, its emergency stability in case of possible malfunction of the ejector pump and the service life of the plant as a whole.

Part of the fresh water is used as the working fluid of the ejector pump. The working fluid enters the ejector pump through the fluid circulation line 30. The temperature of the resulting fresh water is - 50 °C. To use part of the fresh water as the working fluid of the ejector pump, it must be cooled to a temperature of ~ 20 ° C. The minimum pressure created by the ejector pump depends on the temperature of the working fluid. The boiling point of desalinated seawater depends on the pressure (degree of vacuum) created in the condensation and evaporation chamber: the higher the degree of vacuum, the lower the boiling point of seawater.

Partial cooling of the working fluid occurs due to its passage through at least one third heat exchanger 31 located near the storage tank for fresh water 29. A plate-type heat exchanger can also be used as a third heat exchanger 31. The pipeline of the cooling line of the working fluid 32 of the ejector pump with seawater circulating inside it coming from the reservoir using at least one third circulation pump 33 partially passes through the third heat exchanger 31. At least one second coarse filter 34 is installed at the inlet of the third circulation pump.

Thus, the circulation of the working fluid occurs along the contour of the storage tank 29 → third heat exchanger 31 → ejector pump 27 → storage tank 29.

The storage tank for fresh water 29 is equipped with at least one water level sensor 8, which is also controlled by the control unit 9. If a critical point in the storage tank is reached, fresh water can be pumped from the storage tank to other reservoirs or fresh water can be supplied to consumers directly from the plant.

For pumping fresh water, the storage tank 29 can be equipped with at least one centrifugal pump 35, which can also be controlled and powered by a control unit 9, and power is supplied from solar panels 11 located next to the plant.

The coolant and cooler supply lines are equipped with temperature sensors and flow meters, the coolant and cooler discharge lines are equipped with temperature sensors.

Due to the unique design of the evaporation column, made of a cylindrical shape, the lower part of which is coaxially arranged pipes, ensuring the consistency of the level of desalinated seawater in the column ~ at a height of 10 meters, the location of the outlet pipe of the freshwater outlet line above this mark minimizes the possibility of mixing seawater entering the column with fresh water.

In desalination plants known from the prior art, as a rule, there is a need to supply a fresh water outlet line in a salinity control system for the received fresh water. Often, in desalination plants, fresh water discharge pipelines are equipped with a device for monitoring its salinity, including an emergency electromagnetic (solenoid) valve designed to block/open the flow of liquid or gas. If the water salinity monitoring device fixes an increase in the salt concentration in the obtained fresh water above the permissible value, an emergency electromagnetic (solenoid) valve is activated, with which the pipeline for the discharge of fresh water is blocked.

In particular versions of the plant design, the coolant discharge line can be made in the form of an external main line, or at least partially an internal main line passing through at least one of the sections of the channel formed by the external pipe of the evaporation and condensation column.

In particular versions of the plant design, the fresh water discharge line to the storage tank can be made in the form of an external main, or at least partially an internal main passing through at least one of the sections of the channel formed by the external pipe 2 of the evaporation and condensation column.

To increase the autonomy of the plant and increase its service life, a self-cleaning device 37 of the heating radiator, which is a sprayer located above the heating radiator 10, can be mounted in the evaporation chamber of the evaporation and condensation column. The self-cleaning device 37 is electrically connected to the control unit 9 and is equipped with an autonomous power source.

The operation of the self-cleaning device 37 is also controlled using the control unit 9. The presence of an externally controlled self-cleaning device reduces the maintenance costs of the plant. The self-cleaning device 37 may consist of one or more nozzles with which clean fresh or distilled water is sprayed to remove easily soluble sediments or special safe reagents for difficult-to-dissolve sediments. In the case of reagents, it is preferable to use compositions that do not contain volatile components to prevent subsequent flushing of the internal volume of the evaporation and condensation chambers.

The self-cleaning device is also energy efficient due to power from solar panels, and can also be equipped with an autonomous power source. Supplying the evaporation chamber with a self-cleaning device is also a unique feature of this desalination plant.

To increase the productivity of the plant, which consists in increasing the volume of fresh water received, a demister 38 or at least one demister gasket can be installed between the evaporation chamber and the condensation chamber. It is preferable to install the demister in the narrowing part of the evaporation chamber 4. When desalinated seawater evaporates, a demister or demister gaskets will limit any transfer of particles, such as salt, into the resulting steam stream. As seawater evaporates, salts and other pollutants separate and settle on the walls of the evaporation chamber, and under the influence of gravity they will enter the brine and be diverted back to the sea. The steam generated at this time will pass through the demister or demister gaskets and enter the condensation chamber.

### Description of the principle of operation of the plant

With the help of the control unit 9, the ejector pump 27 is put into operation. The ejector pump 27 begins to pump air out of the internal volume of the evaporation chamber 4 and the condensation chamber 5, as a result of which the pressure inside the chambers begins to decrease, and seawater coming from the reservoir begins to fill the outer pipe 2 and the inner pipe 3 of the column 1.

The pressure value is controlled using a pressure sensor 23. The minimum pressure value is determined depending on the temperature of the incoming seawater for desalination: at a seawater temperature of 20-30 °C, the pressure inside the evaporation chamber can be from 24 to 40 mmHg.

When the minimum pressure value is reached, the boiling point of seawater should be reached at a temperature of 20.5-31 ° C.

Rising through the inner pipe 3, seawater will gradually flood the radiator coil 10. The maximum elevation of seawater inside the evaporation chamber 4 will be ~10 meters. Desalinated seawater freely penetrates into the inner pipe 3 and into the space between the inner and outer pipes. When the desalinated water rises through the inner pipe, the heating radiator 10 partially floods. If the height level of the incoming seawater exceeds the space between the inner and outer pipes of the height level of the edge of the upper bowl-shaped part of the inner pipe 3, seawater will flow into the inner pipe. In the process of boiling desalinated seawater, water with increased salinity (brine) is formed. The resulting brine, in turn, is heavier than seawater and will sink down due to a higher density under the influence of gravity through the inner pipe 3, after which it flows into the sea or into a settling tank.

Thus, the natural circulation of desalinated water and the resulting brine inside the column is carried out.

Above the level of the demister 38, water cannot rise, because the inlet pipe of the fresh water outlet line 19 is located above the evaporation chamber 4 in the condensation chamber 5, in which a vacuum is also created and maintained. This ensures that it is impossible to mix desalinated seawater with the resulting fresh water.

Then, using the control unit 9, the first circulation pump 13 is started to supply coolant to the solar collector 14. During the passage of the coolant through the heating circuit of the solar collector 14, it is heated to a temperature of 50-80°C. The heating temperature of the coolant at the outlet of the solar collector is measured using temperature sensors 6, and the flow rate of the coolant using a flow meter 17 installed at the outlet of the solar collector 14. The heated coolant through the coolant supply line 15 enters the heating radiator 10. The boiling of the desalinated water will occur due to the temperature difference: the real temperature of the desalinated water is in the range of 20-30 °C, and the temperature of the coolant is in the range of 50-80 °C. The boiling process of desalinated water will occur even at low temperatures (below 100 °C) due to the created and maintained vacuum in the evaporation chamber 4 and in condensation 5.

Data on the temperature of incoming desalinated seawater entering through the outer pipe 2 and brine entering the inner pipe 3 will be transmitted to the control unit 9 using temperature sensors 6 installed in the transition area (interface) of the inner and outer pipes into the evaporation chamber 4.

In this way, the operation of the heating radiator and the temperature of the coolant are adjusted and monitored.

After the desalinated seawater boils, the resulting steam will rise up and fill the evacuated condensation chamber 5. When desalinated seawater evaporates, demister 38 or demister gaskets will limit any transfer of particles, such as salt, into the resulting steam stream. As the seawater evaporates, salts and other pollutants separate and settle on the walls of the evaporation chamber 4, and also under the influence of gravity will enter the brine and be discharged through the inner pipe 3 back to the sea or into the settling tank. The steam generated at this time will pass through the demister 38 or demister gaskets and enter the condensation chamber 5.

Fresh water vapour will settle on the walls of the condensation chamber 5 and on the cooling radiator coil 22, through which the ~20-30°C coolant is circulated. Hot steam will condense on the surface of the cooling radiator coil 22, flow down the inclined conical surface of the upper part of the evaporation chamber under the action of friction and gravity forces into the outlet pipe of the fresh water outlet line 19. Drops of fresh water will flow down the inclined conical surface of the outlet pipe, then down to the divider, and then into the capillary tubes to the storage tank.

When implementing a fresh water discharge line partially laid inside the evaporation column between the inner and outer pipes, in a particular version of the plant design at a height of 10 to 3 meters (from top to bottom), the resulting fresh water flowing down has an elevated temperature of ~ 50-80°C. Passing inside the evaporation column, fresh water will be additionally cooled due to heat exchange with the outer wall of the inner pipe and with the inner wall of the outer pipe, through which desalinated seawater with a temperature of 20-30°C comes from the reservoir. The seawater entering through the channel formed by the outer pipe 2 and the inner pipe 3 for desalination will be partially heated due to the specified heat exchange with fresh water.

The desalinated seawater in the bowl-shaped part of the inner pipe contacts the heating radiator, boils and evaporates. The steam formed during boiling rises up into the evaporation chamber and condenses, and the resulting saltier and heavier brine, due to gravity, descends down the inner pipe and flows freely into the sea or into the sump (not shown in the drawing).

Such natural circulation is also the novelty and uniqueness of this plant, greatly simplifying its design while reducing energy consumption for desalination of water, as well as increasing its service life.

The heating radiator 10 is heated by the flow of a warm coolant inside it. It is connected to the heating circuit of the solar collector 14, forming one common closed circuit. The coolant is also able to circulate independently by convection (just as water circulates by itself in heating systems in houses), which is also a novelty and uniqueness for this type of desalination systems. But for higher efficiency, forced circulation of the coolant is carried out in the plant using a circulation pump.

In the cooling radiator 22, seawater of natural temperature (20-30 ° C) flows as a cooler, which is supplied from the sea using a circulation pump 25. After passing through the cooling radiator 22 and the third heat exchanger 31, the seawater returns back to the sea.

All processes are automatically controlled and monitored by the control unit 9, which sends online data on technological modes to the central server, as well as sends fault signals.

Since the desalination plant receives the main amount of energy for water evaporation from a solar thermal collector designed to collect solar radiation in the amount of 6,300 kW of thermal power, only 30 kWh of electrical energy per day is required for pumps, computers, sensors and other energy-consuming components. To provide this energy, solar panels with a total sun-receiving surface area of about 150 m2 are used, which is enough to generate the required 30 kWh in a sunny day in a region with high insolation.

To collect solar radiation with a capacity of 6,300 kW, an area of a solar thermal collector of the order of 6,300-7,000 m2 is required. Thus, the desalination plant combines a large thermal collector to provide evaporation and a relatively small area of solar panels, which are a power source for the energy-consuming components of the plant.

The vacuum evaporation and condensation column, as well as the supply and discharge lines of the cooler and coolant can be made of high-temperature plastics such as PTFE (Teflon), PVDF (fluoroplast) or PPS (polyphenylene sulfide), which are a more economical option, resistant to temperatures up to 120 °C, vacuum and aggressive media. To increase the strength and extend the life of the column, the plant can be equipped with an external reinforcing frame. The elements of the vacuum evaporation and condensation column can be made of stainless steel (for example, AISI 316 or AISI 304 grades) or borosilicate glass with a protective casing for visual control of processes. The structure can be solid, collapsible or cast, depending on the operating conditions and plant requirements.

Preferably, the diameter of the outer pipe of the column can be 60-90 cm, the inner 25-55 cm, with a wall thickness of 10-30 mm. The outer diameter of the evaporation and condensation chambers is 100-200 cm with a wall thickness of 10-30 mm. The height of the cup-shaped upper part of the inner tube can be 20-30 cm.

The specific values of the listed parameters, as well as the areas of the solar collector and solar panels, are calculated and selected in accordance with the required level of plant performance (estimated volume of fresh water production), and also depend on technical requirements, climatic conditions and the scale of the project.

As a result of experimental calculations, for the design of an plant with the above dimensions, it is possible to obtain up to 2-3 liters of fresh water per hour from one square meter of a solar collector with an intensity of solar radiation in its plane of about 1 kW/m2. This level of productivity is typical for conditions of high insolation, where solar energy can be effectively used as a power source for desalination of water.

The average indicator of desalination plants in conditions of high solar activity (for example, in regions with a large number of sunny days) is 2-3 liters of fresh water per 1 m2 of solar collector per hour. For a solar collector with an area of 6806 m2 corresponding to the described dimensions (82 × 83 meters), this gives a total capacity of about 13,600-20,400 liters of fresh water per hour, which meets industrial requirements, i.e. confirms the suitability of the desalination plant for use on the scale of large facilities or infrastructure.

The calculation results confirm that the claimed design of the desalination plant has high energy efficiency and can be adapted to different levels of productivity. The dimensions of the solar collector and solar panels, as well as the parameters of pipelines for supply and discharge lines, evaporation and condensation chambers can be adjusted depending on specific operating conditions, available solar energy and required performance. This ensures the flexibility of the design and the possibility of its application in various regions with high solar activity, ensuring stable operation, high energy efficiency and cost-effectiveness of its operation.

## Claims

1. An autonomous desalination plant consisting of
at least one vacuum evaporation and condensation column of cylindrical shape,
at least one storage tank for fresh water,
a power supply,
a control unit,
the lower part of the evaporation and condensation column consists of freely open, coaxially arranged outer and inner pipes,
in this case, the upper part of the inner tube is made expanding to the top,
the outer and inner pipes are hydraulically connected to the evaporation chamber, smoothly coupled to the outer pipe of the column and freely open from above,
moreover, the upper part of the evaporation chamber is made of a conical shape, tapering to the top,
inside the evaporation chamber there is an expanding part of the inner pipe, a heating radiator, the inlet of which is connected to the coolant supply line, and the outlet is connected to the coolant discharge line, made in the form of pipelines,
in this case, the coolant moves along a closed circuit consisting of at least one first circulation pump, a solar collector, a coolant supply line, a heating radiator, and a coolant outlet line,
made in turn in the form of two adjacent pipelines, one of which partially passes through at least one first heat exchanger, and the second partially passes through at least one second heat exchanger,
a condensation chamber located above the evaporation chamber,
inside which a cooling radiator is installed, the inlet of which is connected to the cooler supply line, connected in turn to at least one second circulation pump, and the outlet is connected to the cooler outlet line, the lower end of which is located in the reservoir,
in this case, the condensation chamber is connected to at least one storage tank for fresh water by means of a fresh water outlet line made with a conical outlet pipe connected to a condensation chamber, below which at least one divider is installed in the pipeline of the fresh water outlet line, in which at least one through hole is made for the passage of fresh water,
in this case, the divider is installed in the pipeline of the freshwater drainage line so that its surface at least partially overlaps the pipeline of the freshwater drainage line,
a set of capillary tubes is vertically installed below the divider in the pipeline of the freshwater drainage line, at least partially covering the cross-sectional area of the pipeline of the freshwater drainage line,
in this case, the fresh water discharge line partially passes through the first heat exchanger, the storage tank with fresh water is hydraulically connected to at least one ejector pump, which in turn is connected to the condensation chamber by means of an air pumping line made in the form of a pipeline,
in this case, the first, second, third circulation pumps and the ejector pump are connected to the power source by means of a control unit.

2. The autonomous desalination plant according to claim 1, in which the ratio of the diameters of the outer and inner pipes is in the range from 2:5 to 3:5.

3. The autonomous desalination plant according to claim 1, claim 2, in which the upper expanding part of the inner pipe is made conical, either rounded or rectangular.

4. The autonomous desalination plant according to claim 1, in which the upper part of the conical shape of the evaporation chamber is smoothly coupled with the shell.

5. The autonomous desalination plant according to claim 1, in which the coolant discharge line passes outside the column, or at least partially passes through at least one of the sections of the channel formed by the outer pipe of the evaporation and condensation column.

6. The autonomous desalination plant according to claim 1, in which the fresh water discharge line passes outside the column, or at least partially passes through at least one of the sections of the channel formed by the outer pipe of the evaporation and condensation column.

7. The autonomous desalination plant according to claim 1, in which the power source is a set of solar photovoltaic panels equipped with at least one inverter.

8. The autonomous desalination plant according to claim 7, in which the inverter is equipped with at least one battery.

9. The autonomous desalination plant according to claim 1, in which an electric grid is used as a power source.

10. The autonomous desalination plant according to claim 1, in which the heating circuit of the solar collector is made in the form of a plastic pipe spread out on the ground in a zigzag, or specially made plastic panels, or a pipe rolled into asphalt.

11. The autonomous desalination plant according to claim 1, in which either water or solutions of ethylene, propylene glycol are used as a coolant.

12. The autonomous desalination plant according to claim 11, in which water, ethylene solutions, propylene glycol contain anticorrosive additives.

13. The autonomous desalination plant according to claim 1, in which at the outlet of the first circulation pump, the coolant supply and outlet lines, the cooler supply and outlet lines, and the fresh water outlet lines, at least one temperature sensor and at least one flow meter are installed, electrically connected to the control unit.

14. The autonomous desalination plant according to claim 1 or claim 13, in which at least one water level sensor is installed in the evaporation chamber and in the storage tank for fresh water, electrically connected to the control unit.

15. The autonomous desalination plant according to claim 1 or claim 13, or claim 14, in which at least one temperature sensor and at least one salinity sensor are installed in the upper part of the outer and inner pipes, electrically connected to the control unit.

16. The autonomous desalination plant according to claim 1 or claim 13 or claim 14 or claim 15, in which at least one pressure sensor is installed in the condensation chamber, electrically connected to the control unit.

17. The autonomous desalination plant according to claim 1, in which the inlet and outlet of the working fluid circulation line of the ejector pump, partially passing through at least one third heat exchanger, is hydraulically connected to a storage tank for fresh water.

18. The autonomous desalination plant according to claim 17, in which the inlet and outlet of the cooling line of the working fluid of the ejector pump, partially passing through the third heat exchanger, are located in a reservoir, while at least one third circulation pump is installed at the inlet of the cooling line of the working fluid.

19. The autonomous desalination plant according to claim 1, in which a demister or at least one demister gasket is installed between the evaporation chamber and the condensation chamber.

20. The autonomous desalination plant according to claim 1, in which a self-cleaning device is mounted in the evaporation chamber, which is a sprayer located above the heating radiator and electrically connected to the control unit.

21. The autonomous desalination plant according to claim 1, in which the first and second coarse filters are installed at the entrance to the second and third circulation pumps, respectively.

22. The autonomous desalination plant according to claim 21, in which, after the first and second coarse filters, the first and second fine filters are installed, respectively.

23. The autonomous desalination plant according to claim 1, in which the storage tank for fresh water is equipped with at least one centrifugal pump electrically connected to the control unit.

24. The autonomous desalination plant according to claim 1 or claim 17, in which the first, second and third heat exchangers are plate-shaped.

25. The autonomous desalination plant according to claim 1, in which the outlet of the inner pipe is connected to the sump.
